# EUROPÄISCHE PATENTSCHRIFT

(11) **EP 2 394 516 B1**
(45) Veröffentlichungstag und Bekanntmachung des Hinweises auf die Patenterteilung: **22.08.2012**
(21) Anmeldenummer: 10165842.5
(22) Anmeldetag: 14.06.2010
(51) Int. Cl.: A23G 1/04, A23G 1/18, A23G 1/20, A23G 1/00

(54) **Verfahren zum Betreiben einer Anlage zum Herstellen von Giessprodukten**
Method for operating a facility for producing moulded products
Procédé destiné au fonctionnement d'une installation de fabrication de produits de coulée

(43) Veröffentlichungstag der Anmeldung: 14.12.2011
(73) Patentinhaber: Bühler AG, 9240 Uzwil (CH)
(72) Erfinder: Bauer, Bernhard, 9242 Oberuzwil (CH); Braun, Peter, 8280 Kreuzlingen (CH); Rothenbühler, Peter, 9533 Kirchberg (CH)
(74) Vertreter: Hepp Wenger Ryffel AG

(56) Entgegenhaltungen:
- EP-A2- 0 202 575
- BE-A1- 853 529
- FR-A- 1 381 802
- US-A- 3 638 553

## Beschreibung

Die Erfindung betrifft das technische Gebiet der Herstellung von Giessprodukten, insbesondere die Herstellung von Süsswarenprodukten wie bspw. Schokoladenartikeln.

Anlagen zur Herstellung von Giessprodukten, insbesondere Süsswarenprodukten wie bspw. Schokoladenartikeln sind als solche hinlänglich bekannt. Solche Anlagen umfassen typischerweise wenigstens eine Temperiermaschine für zumindest Anteile der Giessmasse; wenigstens einen Vorratsbehälter für die Giessmasse; wenigstens Giessmaschine für die Giessmasse sowie wenigstens eine Vorrichtung zur Weiterverarbeitung der Giessprodukte.

Die Temperiermaschine dient zur Bereitstellung der Giessmasse mit einer für den Guss geeigneten Konsistenz und physikalisch/chemischen Beschaffenheit. Oftmals wird statt einer vergleichsweise einfach aufgebauten Temperiermaschine, welche die Giessmasse durch kontrolliertes Abkühlen und Aufheizen vorzukristallisieren vermag, auch Vorkristallisatoren eingesetzt. In Vorkristallisatoren wird - zusätzlich zur Abkühlung des eigentlichen Rohmaterialstroms - auch noch kontrolliert Impfmasse (z.B. Pflanzenfettkristallsuspension oder Kakaobutterkristallsuspension oder teilkristallisierte Schkoladenmasse) beigemischt und die gesamte Temperiermaschine so gesteuert oder geregelt, dass die anschliessende Kristallisation rascher abläuft. Geeignete Verfahren zur Vorkristallisation und entsprechende Temperiervorrichtungen sind dem Fachmann bspw. aus den Dokumenten DE 102 57 324 und EP 1 180 941 bekannt.

Aus FR 1 381 802 ist ferner bekannt, bereits temperierte Schokoladenmasse, die im weiteren Verfahren noch nicht verbraucht wurde, mit frisch hinzugefügter Schokoladenmasse zu vermischen.

Die Giessmasse wird anschliessend in einen Vorratsbehälter überführt und anschliessend mit einer Giessmaschine vergossen. Der Füllstand des Vorratsbehälters wird in der derzeitigen Praxis überwacht. In Abhängigkeit von dem detektierten Füllstand wird die Temperiermaschine beschickt: Falls viel Giessmasse benötigt wird, so wird wenig bis gar keine Giessmasse zyklisch durch die Temperiermaschine geführt. Wird hingegen durch den Füllstand des Vorratsbehälters signalisiert, dass wenig bis gar keine Giessmasse benötigt wird, so wird dem Vorratsbehälter auch nur wenig bis gar keine Giessmasse zugeführt und stattdessen die Giessmasse zyklisch durch die Temperiermaschine geführt.

Es hat sich gezeigt, dass das o.g. Vorgehen energetisch nachteilig ist und insbesondere bei der Verwendung von Vorkristallisatoren als Temperiermaschinen ein signifikant erhöhter Bedarf an wertvoller Impfmasse entsteht, da beim zyklischen Führen der Giessmasse durch den Vorkristallisator der bereits einmal erreichte Vorkristallisationsgrad nicht vollumfänglich aufrecht erhalten werden kann.

Zudem wurde gefunden, dass die Schwankungen im Füllstand des Vorratsbehälter sehr gross sein können und insbesondere sehr rasch eintreten können; in Extremfällen kann dies zu Unterbrüchen in der Versorgung der Giessmaschine mit Giessmasse führen.

Es ist daher eine Aufgabe der vorliegenden Erfindung, die Nachteile des Bekannten zu vermeiden, insbesondere also ein Verfahren und eine Vorrichtung bereitzustellen, welche kostengünstiger betrieben werden kann und mit welcher extremen Schwankungen im Füllstand des Vorratsbehälters besser vorgebeugt werden kann, so dass insbesondere Unterbrüche in der Versorgung der Giessmaschine mit Giessmasse vermieden werden können.

Die vorgenannte Aufgabe wird gelöst durch ein Verfahren zum Betreiben einer Anlage zum Herstellen von Giessprodukten aus einer Giessmasse, wobei die Anlage in Produktflussrichtung zumindest die folgenden Komponenten umfasst:
- Temperiermaschine für zumindest Anteile der Giessmasse;
- Vorratsbehälter für die Giessmasse;
- Giessmaschine für die Giessmasse;
- Vorrichtung zur Weiterverarbeitung der Giessprodukte.
Dem Vorratsbehälter werden von der Temperiermaschine zumindest Anteile der Giessmasse zugeführt. Erfindungsgemäss erfolgt in Abhängigkeit von wenigstens einem Steuer- oder Regelsignal, welches basiert auf dem aktuellen und/oder zeitnah zu erwartenden Verbrauch an Giessmasse durch die Giessmaschine und/oder Giessanlage, die Zuführung von zumindest Anteilen der Giessmasse von der Temperiermaschine in den Vorratsbehälter.

Unter der Giessmaschine wird die Maschine verstanden, welche die Giessmasse in die Giessformen dosiert. Unter der Giessanlage wird hingegen die gesamte Anlage stromabwärts der Giessmaschine(n) (umfassend die Giessmaschine(n), ggf. mit integriertem Vorratsbehälter für die Giessmasse) verstanden, also bspw. Förderbänder, Kühlanlagen, etc.; die Verpackungsanlage wird nicht mehr als zur Giessanlage gehörend verstanden, sondern wird zur Eintafelanlage gezählt.

Unter "zeitnah" wird im Rahmen der Erfindung ein Zeitraum von ≤ 30 Sekunden, vorzugsweise ≤ 120 Sekunden, besonders bevorzugt ≤ 300 Sekunden verstanden. Die Aussage über den zeitnah zu erwartenden Verbrauch an Giessmasse durch die Giessmaschine kann insbesondere mittels linearer und/oder nicht-linearer Extrapolation von tatsächlich bestimmten Verbräuchen an Giessmasse erfolgen, wobei hierfür bspw. tatsächlich bestimmte Verbräuche über einen Zeitraum von > 30 Sekunden, vorzugsweise von > 120 Sekunden; typischerweise jedoch von ≤ 300 Sekunden einbezogen werden.

Das Steuer- oder Regelsignal kann typischerweise ein "EIN" oder "AUS" Signal für die Temperiermaschine sein; es ist aber im Rahmen der Erfindung auch möglich, dass es sich bei dem Steuer- oder Regelsignal um ein Signal handelt, mit welchem der Durchsatz von Giessmasse durch die Temperiermaschine auf einen Wert zwischen 0 und dem maximalen Durchsatz eingestellt wird.

Ein Steuer- oder Regelsignal "basiert" erfindungsgemäss auf dem aktuellen und/oder zeitnah zu erwartenden Verbrauch an Giessmasse, wenn es erzeugt wird unter Berücksichtigung entweder des aktuellen und/oder zeitnah zu erwartenden Verbrauchs an Giessmasse durch die Giessmaschine oder Giessanlage. Im Unterschied zum Stand der Technik wird also nicht lediglich der Füllstand des Vorratsbehälters für die Giessmaschine gemessen und auf diesen gemessenen Füllstand reagiert, sondern es fliesst vielmehr direkt der Verbrauch an Giessmasse in die Steuerung und/oder Regelung der Zufuhr von Giessmasse von der Temperiermaschine in den Vorratsbehälter ein. Hierdurch kann die Anlage insgesamt kostengünstiger betrieben werden, da nicht nur auf den statischen Wert des Füllstands im Vorratsbehälter reagiert wird, was mit einer gewissen Ansprechzeit und dann bereits ggf. nötigen, aufwändigeren Änderungen der Flussraten an Giessmasse in der Anlage verbunden ist. Vielmehr erfolgt die Steuerung oder Regelung der Anlage proaktiv, indem der aktuelle und/oder zeitnah zu erwartende Verbrauch an Giessmasse durch die Giessmaschine, also eine dynamische Eigenschaften des die Giessmasse verbrauchenden Teils der Anlage, in die Steuerung oder Regelung der Anlage einfliesst. Ansprechzeiten auf Schwankungen im Verbrauch an Giessmasse können somit verringert werden. Extremen Schwankungen im Füllstand des Vorratsbehälters kann somit besser vorgebeugt werden, so dass insbesondere Unterbrüche in der Versorgung der Giessmaschine mit Giessmasse vermieden werden können.

Bei den Giessprodukten handelt es sich beispielsweise um fetthaltige Suspensionen, kakaohaltige Fettmassen, Süsswaren; vorzugsweise handelt es sich um Schokoladenprodukte.

In einer besonders bevorzugten Ausführungsform handelt es sich bei der Temperiermaschine um eine Vorrichtung zur Herstellung einer Impfmasse (inbesondere einer Impfkristallsuspension), insbesondere in einer Anlage zur Herstellung von Schokoladenprodukten. Bei einer Vorrichtung zur Herstellung von Impfkristallsuspensionen ist ein möglichst gleichmässiger Betrieb unter Vermeidung von unnötiger Rückführung von überproduzierter (aktuell nicht benötigter) Masse besonders erwünscht, da so der Verbrauch an wertvoller Kakaobutter für die Erzeugung der Impfkristalle auf ein Mindestmass beschränkt werden kann. Zudem muss gerade nur die zugeführte Masse thermisch behandelt werden, die auch durch die Giessmaschine oder die Giessanlage verbraucht wird. Damit ist ein vollkontinuierlicher Betrieb der gesamten Anlage ohne Rezyklierung von bereits temperierter Giessmasse möglich, was den Energiebedarf der Anlage signifikant senkt.

Bei der Vorrichtung zur Weiterverarbeitung der Giessprodukte handelt es sich bevorzugt um eine Vorrichtung zur Konfektionierung der Giessprodukte, insbesondere eine Eintafelanlage. Falls Elemente der Eintafelanlagen (bspw. eine oder mehrere Verpackungsmaschinen) ausfallen, kann der Bedarf an Giessmasse durch die Giessmaschine plötzlich sehr stark abfallen, da der Betrieb der Anlage kontinuierlich ist. Gerade in einer solchen Konstellation macht sich die verringerte Ansprechzeit auf Änderungen im Verbrauch an Giessmasse durch die Giessmaschine positiv bemerkbar, da Überproduktionen an Giessmasse vermieden werden können.

Der Vorratsbehälter für die Giessmasse kann in Produktflussrichtung unmittelbar vor der Giessmaschine angeordnet sein oder auch in die Giessmaschine integriert sein.

In besonders bevorzugten Ausführungsformen wird das Steuer- oder Regelsignal erzeugt basierend auf Parametern ausgewählt aus der Gruppe (einzeln oder in allen Kombinationen hiervon):
a) Massenverbrauchsrate und/oder Volumenverbrauchsrate der Giessmasse, insbesondere pro Giesszyklus der Giessmaschine.
   Der Verbrauch an Giessmasse durch die Giessmaschine kann unmittelbar bestimmt werden, bspw. über die verbrauchte Masse oder das verbrauchte Volumen an Giessmasse. Durch die Registrierung des Verbrauchs über die Zeit kann der aktuelle Verbrauch bspw. in g/min oder ml/min leicht ermittelt werden und hierauf basierend auch der zeitnah zu erwartende Verbrauch durch insbesondere lineare Extrapolation ermittelt werden.
b) Fördergeschwindigkeit von Giessformen, die von der Giessmaschine befüllt und abtransportiert werden.
   Die Giessformen empfangen die von der Giessmaschine ausgestossene und somit verbrauchte Giessmasse. Über das Volumen an Giessmasse, welches die einzelnen Giessformen aufnehmen können, kann recht zuverlässig auf den Verbrauch an Giessmasse geschlossen werden, wenn zudem die Fördergeschwindigkeit von Giessformen unter der Giessmaschine hindurch berücksichtigt wird. Werden bspw. zwei Giessformen pro Minute unter der Giessmaschine hindurch gefördert, und hat die einzelne Giessform ein Aufnahmevolumen für Giessmasse von 1000 ml, so ergibt sich ein Verbrauch an Giessmasse von 2000 ml/min.
c) Masse der erzeugten Giessprodukte pro Zeit.
   Auch die Masse der erzeugten Giessprodukte kann als Verbrauchsindikator von Giessmasse durch die Giessmaschine herangezogen werden. Hierfür kann bspw. ein Wägemodul in einer Abtransporteinrichtung (bspw. einem Förderband) vorgesehen sein. Über die Differenz des (bekannten) Gewichts der leeren Giessform und das Gewicht der mit Giessmasse gefüllten Giessform kann unter Berücksichtigung der Fördergeschwindigkeit (siehe oben, b)) der Verbrauch über die Zeit präzise ermittelt werden; insbesondere präziser, als wenn gemäss b) lediglich das Soll-Füllgewicht der Giessformen herangezogen würde.
d) Weiterverarbeitungsrate der Vorrichtung zur Weiterverarbeitung der Giessprodukte.
   Die von der Giessmaschine in die Giessformen gegossenen Produkte werden weiterverarbeitet, bspw. dekoriert, konfektioniert o. dgl.; insbesondere kann es sich bei der Weiterverarbeitung um ein Verpacken handeln. Ist die Menge der weiterverarbeiteten Produkte pro Zeit ermittelt, so kann hieraus über die bekannte Masse und/oder das Volumen der einzelnen Produkte auf den momentanen Verbrauch an Giessmasse und/oder den zeitnah zu erwartenden Verbrauch an Giessmasse rückgeschlossen werden.
e) aktueller Ausstoss der Temperiermaschine.
   Der aktuelle Ausstoss der Temperiermaschine kann entweder direkt, bspw. volumetrisch oder durch Wägung, ermittelt werden; vorzugsweise wird jedoch der aktuelle Ausstoss der Temperiermaschine indirekt über die Pumpenleistung einer Pumpe bestimmt, welche das Material von der Temperiermaschine in die Anlage fördert. Der aktuelle Ausstoss der Temperiermaschine wird vorteilhaft dem Steuer- oder Regelsignal zugrunde gelegt, bspw. wie folgt: Ist der ermittelte, aktuelle oder zeitnah zu erwartende Bedarf an Giessmasse durch die Giessmaschine höher als der aktuelle Ausstoss der Temperiermaschine, so wird letzterer mittels des Steuer- oder Regelsignals erhöht. Falls der ermittelte, aktuelle oder zeitnah zu erwartende Bedarf an Giessmasse durch die Giessmaschine niedriger ist als der aktuelle Ausstoss der Temperiermaschine, so wird letzterer mittels des Steuer- oder Regelsignals erniedrigt.
f) Vorausberechnung des zeitnah zu erwartenden Verbrauchs an Giessmasse durch die Giessmaschine und/oder Giessanlage.
   Wie vorstehend bereits beschrieben kann der zeitnah zu erwartende Verbrauch an Giessmasse durch die Giessmaschine und/oder Giessanlage vorausberechnet werden, bspw. durch Extrapolation, insbesondere lineare Extrapolation oder nicht-lineare Extrapolation. Hierdurch können vorausberechenbare Änderungen des Verbrauchs an Giessmasse durch die Giessmaschine und/oder Giessanlage besonders effektiv frühzeitig berücksichtigt werden bei der Beschickung des Vorratsbehälters mit Giessmasse.

In bevorzugten Ausführungsformen kann es sich bei dem wenigstens einen Steuer- oder Regelsignal um ein Signal handeln, das erzeugt wird zusätzlich zu Parametern gemäss a) bis f) (einzeln und in allen Kombinationen) basierend auf
g) dem Füllstand und/oder der Füllstandshöhenveränderung im Vorratsbehälter; und/oder
h) der Füllmasse und/oder der Füllmassenänderung im Vorratsbehälter; und/oder
i) dem Füllvolumen und/oder der Füllvolumenveränderung im Vorratsbehälter.

Es ist ersichtlich, dass insbesondere die statischen Werte wie Füllstand, Füllmasse oder Füllvolumen zweckmässig herangezogen werden, um die Beschickung des Vorratsbehälters zweckmässig zu steuern oder zu regeln. So kann bspw. trotz ermitteltem, geringem aktuelle Verbrauch an Giessmasse durch die Giessmaschine bspw. die Beschickung des Vorratsbehälters dennoch erhöht werden (bspw. über eine Erhöhung des Ausstosses der Temperiermaschine), wenn der Füllstand, die Füllmasse oder das Füllvolumen (zu) niedrig sind. Auf diese Weise können Zeiten niedrigen Verbrauchs zum Auffüllen des Vorrats an Giessmasse genutzt werden. Ebenso kann in analoger Art und Weise für die o.g. Steuerung auch die Füllstandshöhenveränderung, die Füllmassenveränderung oder die Füllvolumenänderung herangezogen werden, also die Änderungen über die Zeit. Werden die letztgenannten dynamischen Werte herangezogen, ist eine weitere Verkürzung der Ansprechzeiten erzielbar: So ist es bspw. möglich, bei sinkendem Füllstand bereits aufgrund bspw. der dynamischen Füllstandshöhenveränderung bereits vor Erreichen des zulässigen Tiefststands im Vorratsbehälters das Steuer- oder Regelsignal zu erzeugen, das dem Erreichen des zulässigen Tiefststands zuvorkommt und ein Abschalten verhindert.

Es kann zweckmässig sein, die vorgenannten Füllstandsparameter g) - i) nicht nur in das vorstehend diskutierte Steuer- oder Regelsignal einfliessen zu lassen, sondern ggf. ein weiteres Steuer- oder Regelsignal zu erzeugen, welches insbesondere unabhängig von dem anderen Steuer- oder Regelsignal (insbesondere gemäss a) - h)) ist; hierdurch kann bspw. eine Sicherheitsschaltung aufgebaut werden, welche in jedem Fall rechtzeitig vor/bei Erreichen/Unterschreiten eines zulässigen Tiefststands oder Erreichen/Überschreiten eines zulässigen Höchststands im Vorratsbehälter ein Signal zur Steuerung oder Regelung der Beschickung des Vorratsbehälters erzeugt. Als Stellgrösse kann hierfür bspw. der Ausstoss der Temperiermaschine gewählt werden, wie vorstehend beschrieben.

Ein weiterer Aspekt der Erfindung betrifft eine Anlage zum Herstellen von Giessprodukten aus einer Giessmasse, umfassend in Produktflussrichtung zumindest die Komponenten
- Temperiermaschine für zumindest Anteile der Giessmasse;
- Vorratsbehälter für die Giessmasse;
- Giessmaschine für die Giessmasse;
- Vorrichtung zur Weiterverarbeitung der Giessprodukte;
wobei dem Vorratsbehälter von der Temperiermaschine zumindest Anteile der Giessmasse zuführbar sind. Die Anlage ist derart ausgebildet, dass in Abhängigkeit von wenigstens einem Steuer- oder Regelsignal, welches basiert auf dem aktuellen und/oder zeitnah zu erwartenden Verbrauch an Giessmasse durch die Giessmaschine und/oder Giessanlage, die Zuführung von zumindest Anteilen der Giessmasse von der Temperiermaschine in den Vorratsbehälter erfolgen kann.

Der prinzipielle Aufbau derartiger Anlagen ist dem Fachmann hinlänglich bekannt. Die notwendige Verschaltung der Komponenten (und evtl. nötiger Zusatzkomponenten) der Anlage, damit in Abhängigkeit von wenigstens einem Steuer- oder Regelsignal, welches basiert auf dem aktuellen und/oder zeitnah zu erwartenden Verbrauch an Giessmasse durch die Giessmaschine und/oder Giessanlage, die Zuführung von zumindest Anteilen der Giessmasse von der Temperiermaschine in den Vorratsbehälter erfolgen kann, kann vom Fachmann leicht bewerkstellig werden. Insbesondere sind die logischen Verknüpfungen der einzelnen Parameter a) - i) dem Fachmann schaltungstechnisch leicht möglich. Falls Gewichtungen einzelner Parameter gewünscht oder zweckmässig sind, so können diese leicht mit Routineversuchen ermittelt werden.

Eine solchermassen fachmännisch ausgestattete Anlage wird bestimmungsgemäss mit dem vorstehend ausführlich beschriebenen Verfahren betrieben.

Ein weiterer Aspekt der Erfindung betrifft ein Computerprogrammprodukt, umfassend ein computer-lesbares Medium mit maschinell lesbarem Programmcode, welcher, wenn er auf einem Computer, der mit einer Anlage zum Herstellen von Giessprodukten aus einer Giessmasse, insbesondere einer Anlage wie vorstehend beschrieben, wirkverbunden ist, ausgeführt wird, die Anlage betreibt gemäss einem Verfahren wie vorstehend beschrieben.

Die logischen Verknüpfungen der einzelnen Parameter, die Eingang in das vorstehend beschriebene Verfahren zum Betreiben einer Anlage finden, sind vorteilhaft in Software auf einem Datenträger festgehalten. Bei bestimmungsgemässem Gebrauch dieses Datenträgers mit der Software manifestieren sich bei der Benutzung der Anlage die vorstehend im Zusammenhang mit dem Verfahren ausführlich diskutierten Vorteile.

Ein weiterer Aspekt der Erfindung betrifft ein Verfahren zum Umrüsten einer Anlage zum Herstellen von Giessprodukten aus einer Giessmasse, wobei die Anlage in Produktflussrichtung zumindest die Komponenten
- Temperiermaschine für zumindest Anteile der Giessmasse;
- Vorratsbehälter für die Giessmasse;
- Giessmaschine für die Giessmasse;
- Vorrichtung zur Weiterverarbeitung der Giessprodukte;
umfasst, und wobei dem Vorratsbehälter von der Temperiermaschine zumindest Anteile der Giessmasse zuführbar sind. Die Anlage wird derart umgerüstet, dass in Abhängigkeit von wenigstens einem Steuer- oder Regelsignal, welches basiert auf dem aktuellen und/oder zeitnah zu erwartenden Verbrauch an Giessmasse durch die Giessmaschine und/oder die Giessanlage, die Zuführung von zumindest Anteilen der Giessmasse von der Temperiermaschine in den Vorratsbehälter erfolgen kann.

Es versteht sich, dass eine allenfalls bereits bestehende Anlage vom Fachmann aufgerüstet werden kann, bspw. durch Ausstattung mit einem Computerprogrammprodukt wie vorstehend beschrieben, geeigneten Sensoren für bspw. den Füllstand, das Gewicht, Volumen o. dgl.; die Aufrüstung kann weiter umfassen das Installieren von Füllstandssensoren, die ein den Füllstand wiedergebendes Signal erzeugen (bspw. optische Systeme wie eine Kamera; Füllstandssonden; Signalerzeuger, aus dem Gewicht abgeleitet (bspw. Drucksensoren oder Wägemodule)). Auch können Sensoren für die Fördergeschwindigkeit von Giessformen oder Durchfluss- /Durchsatzsensoren installiert werden, um die Parameter insbesondere gemäss a) - i) zu bestimmen.

Die Erfindung wird nachfolgend anhand von Ausführungsbeispielen näher erläutert, ohne dass der Gegenstand der Erfindung auf die gezeigten Ausführungsformen zu beschränken wäre. Es zeigen:
- Fig. 1:: Blockdiagramm einer Anlage zum Herstellen von Giessprodukten;
- Fig. 2:: Verbrauch von Giessmasse durch die Giessmaschine über die Zeit (exemplarisch);
- Fig. 3:: Schematischer Aufbau einer Anlage zum Herstellen von Giessprodukten, mit Flussschema der Rohprodukte und der Giessmasse;
- Fig. 4:: a) Vorratsbehälter mit zwei Sensoren,
b) Vorratsbehälter mit drei Sensoren;
- Fig. 5:: Schematischer Signalfluss in einer Anlage zum Herstellen von Giessprodukten;
- Fig. 6:: Eintafelanlage (schematisch).

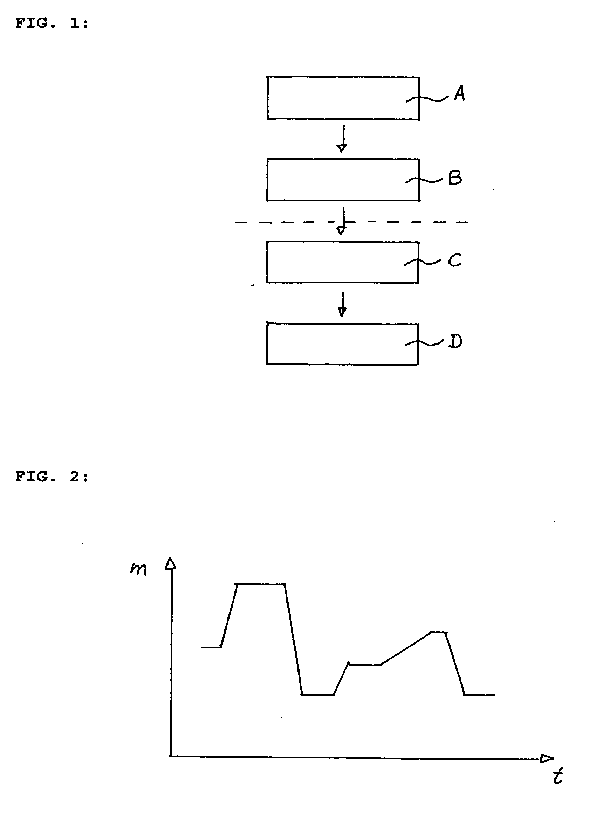

Fig. 1 zeigt den prinzipiellen Aufbau einer konventionellen Anlage zum Herstellen von Giessprodukten. Eine solche Anlage umfasst im Falle der Herstellung von Schokoladenprodukten die Funktionen
A: Zuführung von Schokoladenmasse;
B: Temperierung oder Vorkristallisation; Bevorratung;
C: Giessen;
D: Weiterverarbeitung.
Im Stand der Technik besteht ein Kommunikationsloch zwischen den Teilen C und D einerseits und den Teilen A und B andererseits. Zwar wird derzeit die Weiterverarbeitungsrate selbstverständlich an die Menge des gegossenen Produkts angepasst, und umgekehrt. Jedoch werden die Funktionen A und B im wesentlichen autark gesteuert oder geregelt, und zwar ausschliesslich über den Füllstand im Vorratsbehälter. Durch diesen (statischen) Füllstand ist jedoch nichts über den aktuellen und/oder zeitnah zu erwartenden Verbrauch an Giessmasse durch die Giessmaschine ausgesagt; hierauf wird im Stand der Technik erst reagiert, wenn es sich im Füllstand des Vorratsbehälters manifestiert. Hierdurch ist die Ansprechzeit im Stand der Technik gegenüber der vorliegenden Erfindung höher, mit den vorstehend ausführlich beschriebenen Nachteilen.

Fig. 2 zeigt den Verbrauch von Giessmasse durch die Giessmaschine über die Zeit (exemplarisch). Der Verbrauch an Giessmasse kann sich rasch ändern, bspw. wenn eine nachgeschaltete Eintafelanlage Störungen aufweist. Um solchen grossen Schwankungen des Verbrauchs möglichst frühzeitige mit einer Anpassung des Füllstands im Vorratsbehälter begegnen zu können, hat sich die vorliegende Erfindung als sehr vorteilhaft erwiesen, da Ansprechzeiten in der Befüllung des Vorratsbehälters signifikant verringert werden können.

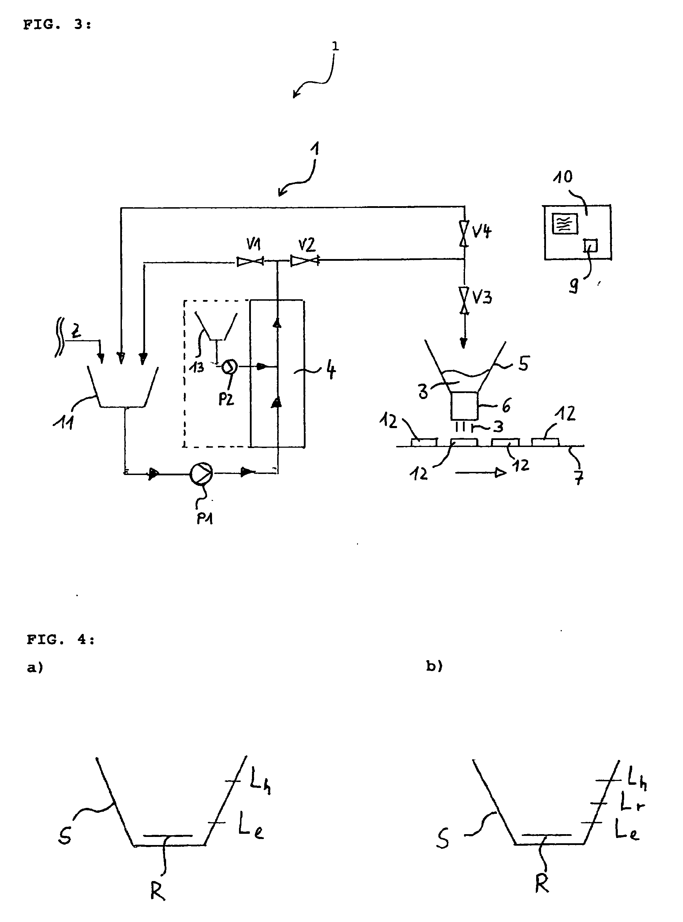

Fig. 3 illustriert den schematischen Flussplan einer erfindungsgemässen Anlage zum Herstellen von Giessprodukten (2; in der Giessform 12 befindlich); das gezeigte Schema ist - soweit dargestellt - eine erfindungsgemässe Ausgestaltung der Anlage. Über eine Zuführung Z gelangt Schokoladenmasse und ggf. Zusatzstoffe in den Einfüllbehälter 11. Von diesem wird die Masse mittels einer Pumpe P1 in die an sich bekannte Temperiermaschine 4 gefördert, die in dem gezeigten Ausführungsbeispiel als Vorrichtung zur Herstellung einer Impfkristallsuspension ausgebildet ist. Die in der Temperiermaschine 4 in der Prozesseinheit 13 erzeugte und/oder bevorratete Impfmasse (Impfkristallsuspension bestehend aus Pflanzenfetten oder Kakaobutter oder Schokoladenmasse) wird mittels einer Pumpe P2 dem Strom der Masse durch die Temperiermaschine 4 beigemischt. Über die Ventile V1, V2, V3 und V4 kann in an sich bekannter Art und Weise die temperierte und ggf. mit Impfkristallen versetzte Giessmasse 3 in den Vorratsbehälter 5 gefördert werden. Bei geringem Bedarf an Giessmasse 3 im Vorratsbehälter 5 kann die Giessmasse entweder via Ventil V1 oder Ventile V2 und V4 in den Einfüllbehälter 11 zurückgeführt und zykliert werden. Dem Vorratsbehälter 5 nachgeordnet ist die Giessmaschine 6, welche die Giessmasse 3 in Giessformen 12 giesst, die sich bspw. auf einem Förderband befinden und unter dem Giesskopf der Giessmaschine 6 hindurchgeführt werden. Die Giessformen 12 werden der Anlage 7 zur Weiterverarbeitung zugeführt. Ein Computer 10 steuert und/oder regelt die Anlage 1, basierend auf einem auf einem Computerprogrammprodukt 9 hinterlegten Softwarecode.

In Fig. 4 ist der Vorratsbehälter 5 in Detaildarstellungen gezeigt, worin Füllstandssensoren illustriert sind. Im unteren Bereich des Vorratsbehälters ist ein Rührwerk R angeordnet, welches im Betrieb möglichst immer vollständig bedeckt sein soll, um das unerwünschte Einschlagen von Luft zu vermeiden. In Fig. 4 a) ist eine Variante mit lediglich zwei Füllstandssensoren gezeigt, nämlich L₁ (Sensor für den niedrigsten zulässigen Füllstand) und Lₕ (für den höchsten zulässigen Füllstand). Über von diesen Sensoren ausgelöste Signale kann die Befüllung des Vorratsbehälters getriggert werden. Im Rahmen der Erfindung ist es sinnvoll, die Signale dieser Sensoren insbesondere als Sicherheitsüberwachung hinzu zu ziehen, zusätzlich zum über den Verbrauch an Giessmasse durch die Giessmaschine ermittelten, dynamischen Wert des Verbrauchs. In Fig. 4 b) ist eine Variante mit einem zusätzlichen Füllstandssensor Lᵣ gezeigt; wird das Erreichen des refill Levels über den Füllstandssensor Lr detektiert, so wird über ein Refill Signal die Befüllung des Vorratsbehälters getriggert. Bei Erreichen es max. Füllstands (Ansprechen des Füllstandssensors Lₕ) wird die Befüllung gestoppt.

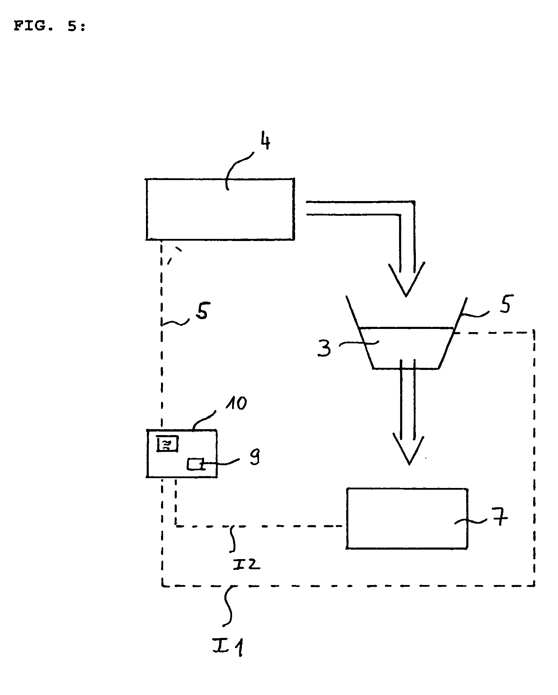

In Fig. 5 ist schematisch ein erfindungsgemässes Steuer- oder Regelsignal in der Anlage zum Herstellen von Giessprodukten angedeutet. Von der Temperiermaschine 4 wird Giessmasse 3 in den Vorratsbehälter 5 gefördert. Der Füllstand im Vorratsbehälter 5 wird mittels eines Computers 10 (mit entsprechendem Computerprogrammprodukt, wie vorstehend beschrieben) überwacht und basierend auf dem detektierten Füllstand der Ausstoss der Temperiermaschine 4 insbesondere in den Vorratsbehälter 5 gesteuert oder geregelt (angedeutet durch den Input I1). Besonders vorteilhaft wird erfindungsgemäss ein Steuer- oder Regelsignal S erzeugt, welches basiert auf dem aktuellen und/oder zeitnah zu erwartenden Verbrauch an Giessmasse 3 durch die Giessmaschine, wobei der Verbrauch an Giessmasse bspw. an der Anlage 7 zur Weiterverarbeitung direkt abgegriffen oder aus Messwerten an dieser Anlage 7 ermittelt werden kann (angedeutet durch den Input I2).

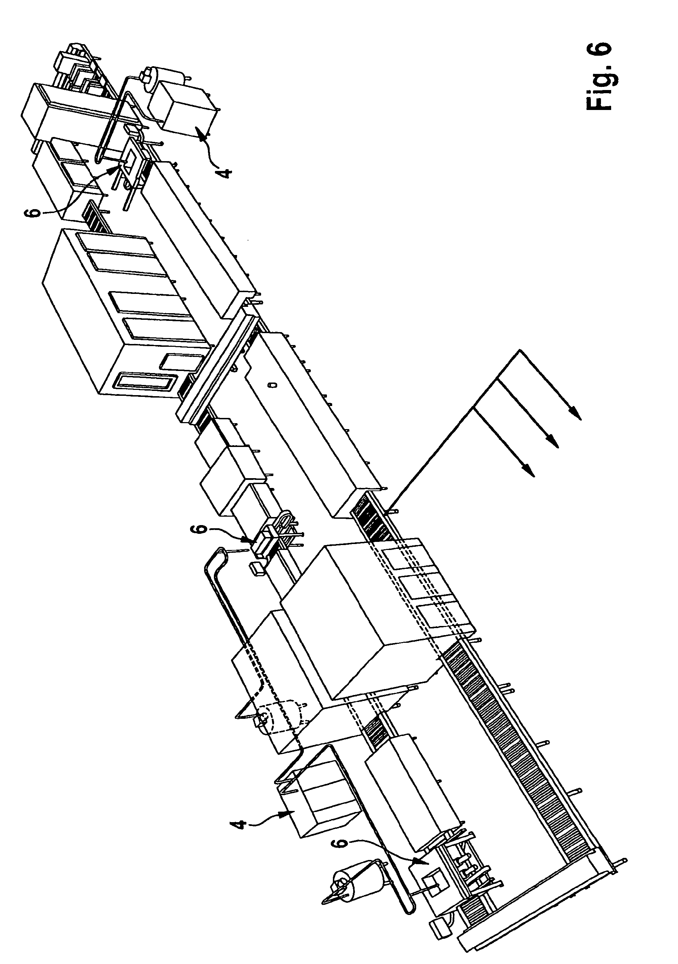

In Fig. 6 ist schematisch eine Eintafelanlage gezeigt. Zur Eintafelanlage gehörend werden im allgemeinen die (ggf. mehreren) Temperiermaschinen 4 sowie die (ggf. mehreren) Giessmaschinen 6 verstanden. Zudem umfasst die Eintafelanlage üblicherweise Kühlstrecken und/oder -türme sowie Förderbänder. Im vorderen Bereich ist mit drei Pfeilen der Abtransport der Giessprodukte zu drei Verpackungsmaschinen angedeutet; die Verpackungsmaschinen werden vorliegend nicht als zur Eintafelanlage gehörend verstanden. Unter der Giessanlage wird vorliegend der Anlagenteil stromabwärts der Giessmaschine (4) (incl. ggf. integrierte Vorratsbehälter für die Giessmasse) verstanden, jedoch excl. allfälliger Verpackungsmaschinen.

## Patentansprüche

1. Verfahren zum Betreiben einer Anlage (1) zum Herstellen von Giessprodukten (2) aus einer Giessmasse (3), umfassend in Produktflussrichtung zumindest die Komponenten
- Temperiermaschine (4) für zumindest Anteile der Giessmasse (3);
- Vorratsbehälter (5) für die Giessmasse (3);
- Giessmaschine (6) für die Giessmasse (3);
- Vorrichtung (7) zur Weiterverarbeitung der Giessprodukte (2);
wobei dem Vorratsbehälter (5) von der Temperiermaschine (4) zumindest Anteile der Giessmasse (3) zugeführt werden, **dadurch gekennzeichnet, dass** in Abhängigkeit von wenigstens einem Steuer- oder Regelsignal (S), welches basiert auf dem aktuellen und/oder zeitnah zu erwartenden Verbrauch an Giessmasse (3) durch die Giessmaschine (6) und/oder die Giessanlage, die Zuführung von zumindest Anteilen der Giessmasse (3) von der Temperiermaschine (4) in den Vorratsbehälter (5) erfolgt.

2. Verfahren gemäss Anspruch 1, **dadurch gekennzeichnet, dass** die Giessprodukte (2) ausgewählt sind aus der Gruppe bestehend aus fetthaltigen Suspensionen, kakaohaltigen Fettmassen, Süsswaren und Schokoladenprodukten.

3. Verfahren gemäss einem der Ansprüche 1 oder 2, **dadurch gekennzeichnet, dass** es sich bei der Temperiermaschine (4) um eine Vorrichtung zur Herstellung einer Impfkristallsuspension handelt, insbesondere umfassend teilkristallisierte Pflanzenfette, Kakaobutter oder Schokoladenmasse.

4. Verfahren gemäss einem der Ansprüche 1 bis 3, **dadurch gekennzeichnet, dass** es sich bei der Vorrichtung (7) zur Weiterverarbeitung der Giessprodukte (2) um Teile einer Eintafelanlage handelt, insbesondere umfassend
- Fördereinrichtungen, insbesondere Förderbänder; und/oder
- Kühleinrichtungen, insbesondere Kühltürme.

5. Verfahren gemäss einem der Ansprüche 1 bis 4, **dadurch gekennzeichnet, dass** es sich bei dem Steuer- oder Regelsignal (S) um ein Signal handelt, das erzeugt wird basierend auf Parametern ausgewählt aus der Gruppe:
- Massenverbrauchsrate und/oder Volumenverbrauchsrate der Giessmasse (3), insbesondere pro Giesszyklus der Giessmaschine (6);
- Fördergeschwindigkeit von Giessformen (8), die von der Giessmaschine (6) befüllt und abtransportiert werden;
- Masse der erzeugten Giessprodukte (2) pro Zeit;
- Weiterverarbeitungsrate der Vorrichtung (7) zur Weiterverarbeitung der Giessprodukte (2);
- aktueller Ausstoss der Temperiermaschine (4);
- Vorausberechnung des zeitnah zu erwartenden Verbrauchs an Giessmasse (3) durch die Giessmaschine (6) und/oder die Giessanlage;
und Kombinationen hiervon.

6. Verfahren gemäss Anspruch 5, **dadurch gekennzeichnet, dass** es sich bei dem wenigstens einen Steuer- oder Regelsignal (S) um ein Signal handelt, das erzeugt wird zusätzlich basierend auf
- dem Füllstand und/oder der Füllstandshöhenveränderung im Vorratsbehälter (5); und/oder
- der Füllmasse und/oder der Füllmassenänderung im Vorratsbehälter (5); und/oder
- dem Füllvolumen und oder der Füllvolumenveränderung im Vorratsbehälter (5).

7. Verfahren gemäss Anspruch 5, **dadurch gekennzeichnet, dass** ein weiteres Steuer- oder Regelsignal (S) erzeugt wird, basierend auf
- dem Füllstand und/oder der Füllstandshöhenveränderung im Vorratsbehälter (5); und/oder
- der Füllmasse und/oder der Füllmassenänderung im Vorratsbehälter (5); und/oder
- dem Füllvolumen und oder der Füllvolumenveränderung im Vorratsbehälter (5).

8. Anlage (1) zum Herstellen von Giessprodukten (2) aus einer Giessmasse (3), umfassend in Produktflussrichtung zumindest die Komponenten
- Temperiermaschine (4) für zumindest Anteile der Giessmasse (3);
- Vorratsbehälter (5) für die Giessmasse (3);
- Giessmaschine (6) für die Giessmasse (3);
- Vorrichtung (7) zur Weiterverarbeitung der Giessprodukte (2);
wobei dem Vorratsbehälter (5) von der Temperiermaschine (4) zumindest Anteile der Giessmasse (3) zuführbar sind, **dadurch gekennzeichnet, dass** die Anlage (1) derart ausgebildet ist, dass in Abhängigkeit von wenigstens einem Steuer- oder Regelsignal (S), welches basiert auf dem aktuellen und/oder zeitnah zu erwartenden Verbrauch an Giessmasse (3) durch die Giessmaschine (6) und/oder die Giessanlage, die Zuführung von zumindest Anteilen der Giessmasse (3) von der Temperiermaschine (4) in den Vorratsbehälter (5) erfolgen kann.

9. Computerprogrammprodukt (9), umfassend ein computerlesbares Medium mit maschinell lesbarem Programmcode, welcher, wenn er auf einem Computer (10), der mit einer Anlage (1) zum Herstellen von Giessprodukten (2) aus einer Giessmasse (3), insbesondere einer Anlage (1) gemäss Anspruch 8, wirkverbunden ist, ausgeführt wird, die Anlage (1) betreibt gemäss einem Verfahren nach einem der Ansprüche 1 bis 7.

10. Verfahren zum Umrüsten einer Anlage (1) zum Herstellen von Giessprodukten (2) aus einer Giessmasse (3), wobei die Anlage (1) in Produktflussrichtung zumindest die Komponenten
- Temperiermaschine (4) für zumindest Anteile der Giessmasse (3);
- Vorratsbehälter (5) für die Giessmasse (3);
- Giessmaschine (6) für die Giessmasse (3);
- Vorrichtung (7) zur Weiterverarbeitung der Giessprodukte (2);
umfasst, und wobei dem Vorratsbehälter (5) von der Temperiermaschine (4) zumindest Anteile der Giessmasse (3) zuführbar sind, **dadurch gekennzeichnet, dass** die Anlage (1) derart umgerüstet wird, dass in Abhängigkeit von wenigstens einem Steuer- oder Regelsignal (S), welches basiert auf dem aktuellen und/oder zeitnah zu erwartenden Verbrauch an Giessmasse (3) durch die Giessmaschine (6) und/oder die Giessanlage, die Zuführung von zumindest Anteilen der Giessmasse (3) von der Temperiermaschine (4) in den Vorratsbehälter (5) erfolgen kann.

11. Verfahren gemäss Anspruch 10, **dadurch gekennzeichnet, dass** die Anlage (1) mit einem Computerprogrammprodukt gemäss Anspruch 9 ausgestattet wird.

## Claims

1. Method for operating an installation (1) for producing cast products (2) from a casting mass (3), comprising at least the following components in the direction of product flow:
- a tempering machine (4) for at least parts of the casting mass (3);
- a storage container (5) for the casting mass (3);
- a casting machine (6) for the casting mass (3);
- a device (7) for further processing the cast products (2), at least parts of the casting mass (3) being fed to the storage container (5) from the tempering machine (4), **characterized in that** the feeding of at least parts of the casting mass (3) from the tempering machine (4) into the storage container (5) is performed in dependence on at least one controlling or regulating signal (S) which is based on the current consumption and/or shortly to be expected consumption of casting mass (3) by the casting machine (6) and/or casting installation.

2. Method according to Claim 1, **characterized in that** the cast products (2) are selected from the group comprising fat-containing suspensions, cocoa-containing fatty masses, confectionery and chocolate products.

3. Method according to either of Claims 1 and 2, **characterized in that** the tempering machine (4) is a device for producing a seed crystal suspension, in particular comprising partially crystallized vegetable fats, cocoa butter or chocolate mass.

4. Method according to one of Claims 1 to 3, **characterized in that** the device (7) for further processing the cast products (2) is part of a moulding installation for solid chocolate, in particular comprising
- conveying devices, in particular conveyor belts; and/or
- cooling devices, in particular cooling towers.

5. Method according to one of Claims 1 to 4, **characterized in that** the controlling or regulating signal (S) is a signal which is generated on the basis of parameters selected from the group comprising:
- the mass consumption rate and/or volume consumption rate of the casting mass (3), in particular per casting cycle of the casting machine (6);
- the conveying speed of casting moulds (8) which are filled by the casting machine (6) and transported away;
- the mass of cast products (2) produced per unit of time;
- the further processing rate of the device (7) for further processing the cast products (2);
- the current output of the tempering machine (4);
- the precalculation of the shortly to be expected consumption of casting mass (3) by the casting machine (6) and/or casting installation;
and combinations thereof.

6. Method according to Claim 5, **characterized in that** the at least one controlling or regulating signal (S) is a signal which is generated in addition on the basis of
- the filling level and/or the change in height of the filling level in the storage container (5); and/or
- the filling mass and/or the change in filling mass in the storage container (5); and/or
- the filling volume and/or the change in filling volume in the storage container (5).

7. Method according to Claim 5, **characterized in that** a further controlling or regulating signal (S) is generated on the basis of
- the filling level and/or the change in height of the filling level in the storage container (5); and/or
- the filling mass and/or the change in filling mass in the storage container (5); and/or
- the filling volume and/or the change in filling volume in the storage container (5).

8. Installation (1) for producing cast products (2) from a casting mass (3), comprising at least the following components in the direction of product flow
- a tempering machine (4) for at least parts of the casting mass (3);
- a storage container (5) for the casting mass (3);
- a casting machine (6) for the casting mass (3);
- a device (7) for further processing the cast products (2); it being possible for at least parts of the casting mass (3) to be fed to the storage container (5) from the tempering machine (4), **characterized in that** the installation (1) is formed in such a way that the feeding of at least parts of the casting mass (3) from the tempering machine (4) into the storage container (5) can be performed in dependence on at least one controlling or regulating signal (S) which is based on the current consumption and/or shortly to be expected consumption of casting mass (3) by the casting machine (6) and/or casting insulation.

9. Computer program product (9), comprising a computer-readable medium with machine-readable program code, which, when it is run on a computer (10) that is operatively connected to an installation (1) for producing cast products (2) from a casting mass (3), in particular an installation (1) according to Claim 8, operates the installation (1) on the basis of a method according to one of Claims 1 to 7.

10. Method for converting an installation (1) for producing cast products (2) from a casting mass (3), the installation (1) comprising at least the following components in the direction of product flow
- a tempering machine (4) for at least parts of the casting mass (3);
- a storage container (5) for the casting mass (3);
- a casting machine (6) for the casting mass (3);
- a device (7) for further processing the cast products (2); and it being possible for at least parts of the casting mass (3) to be fed to the storage container (5) from the tempering machine (4), **characterized in that** the installation (1) is converted in such a way that the feeding of at least parts of the casting mass (3) from the tempering machine (4) into the storage container (5) can be performed in dependence on at least one controlling or regulating signal (S) which is based on the current consumption and/or shortly to be expected consumption of casting mass (3) by the casting machine (6) and/or casting installation.

11. Method according to Claim 10, **characterized in that** the installation (1) is provided with a computer program product according to Claim 9.

## Revendications

1. Procédé destiné au fonctionnement d'une installation (1) de fabrication de produits de coulée (2) à partir d'une masse de coulée (3), comprenant, en suivant la direction d'écoulement du produit, au moins les composants suivantes :
- une machine de chambrage (4) pour au moins des parties de la masse de coulée (3) ;
- des réservoirs (5) pour la masse de coulée (3) ;
- une machine de coulée (6) pour la masse de coulée (3) ;
- un dispositif (7) pour le traitement ultérieur des produits de coulée (2) ;
au moins des parties de la masse de coulée (3) étant amenées au réservoir (5) depuis la machine de chambrage (4), **caractérisé en ce qu'**en fonction d'au moins un signal de commande ou de régulation (S) basé sur la consommation de masse de coulée (3) actuelle et/ou incessamment attendue par la machine de coulée (6) et/ou l'installation de coulée, l'amenée d'au moins des parties de la masse de coulée (3) se produit de la machine de chambrage (4) dans le réservoir (5).

2. Procédé selon la revendication 1, **caractérisé en ce que** les produits de coulée (2) sont sélectionnés dans le groupe comprenant des suspensions de matière grasse, des masses de matière grasse contenant du cacao, des sucreries et des produits chocolatés.

3. Procédé selon l'une quelconque des revendications 1 ou 2, **caractérisé en ce que** la machine de chambrage (4) est un dispositif servant à fabriquer une suspension de cristal d'ensemencement, comprenant notamment de la graisse végétale en partie cristallisée, du beurre de cacao ou une masse chocolatée.

4. Procédé selon l'une quelconque des revendications 1 à 3, caractérisé en ce le dispositif (7) de traitement ultérieur des produits de coulée (2) fait partie d'une installation de mise en plaque comprenant notamment :
- des dispositifs de transport, notamment des courroies de transport ; et/ou
- des dispositifs de refroidissement, notamment des tours de refroidissement.

5. Procédé selon l'une quelconque des revendications 1 à 4, caractérisé en ce le signal de commande ou de régulation (S) est un signal produit sur la base de paramètres sélectionnés dans le groupe comprenant :
- le taux de consommation de masse et/ou le taux de consommation de volume de la masse de coulée (3), notamment par cycle de coulée de la machine de coulée (6) ;
- la vitesse de transport des moules de coulée (8) remplis par la machine de coulée (6) avant d'être évacués ;
- la masse de produits de coulée (2) produits par période de temps ;
- le taux de traitement ultérieur du dispositif (7) de traitement ultérieur des produits de coulée (2) ;
- la production actuelle de la machine de chambrage (4) ;
- le calcul prévisionnel de la consommation incessamment attendue de masse de coulée (3) par la machine de coulée (6) et/ou l'installation de coulée ; et des combinaisons de ceux-ci.

6. Procédé selon la revendication 5, **caractérisé en ce que** l'au moins un signal de commande ou de régulation (S) est un signal produit en outre sur la base de :
- l'état de remplissage et/ou la variation de l'état de remplissage dans le réservoir (5) ; et/ou
- la masse de remplissage et/ou la variation de masse de remplissage dans le réservoir (5) ; et/ou
- le volume de remplissage et/ou la variation de volume de remplissage dans le réservoir (5).

7. Procédé selon la revendication 5, **caractérisé en ce qu'**un signal de commande ou de régulation (S) supplémentaire est produit, sur la base de :
- l'état de remplissage et/ou la variation de l'état de remplissage dans le réservoir (5) ; et/ou
- la masse de remplissage et/ou la variation de masse de remplissage dans le réservoir (5) ; et/ou
- le volume de remplissage et/ou la variation de volume de remplissage dans le réservoir (5).

8. Installation (1) de fabrication de produits de coulée (2) à partir d'une masse de coulée (3), comprenant, en suivant la direction d'écoulement du produit, au moins les composants suivants :
- une machine de chambrage (4) pour au moins des parties de la masse de coulée (3) ;
- des réservoirs (5) pour la masse de coulée (3) ;
- une machine de coulée (6) pour la masse de coulée (3) ;
- un dispositif (7) pour le traitement ultérieur des produits de coulée (2) ;
au moins des parties de la masse de coulée (3) pouvant être amenées au réservoir (5) depuis la machine de chambrage (4), **caractérisée en ce que** l'installation (1) est réalisée de telle sorte qu'en fonction d'au moins un signal de commande ou de régulation (S) basé sur la consommation de masse de coulée (3) actuelle et/ou incessamment attendue par la machine de coulée (6) et/ou l'installation de coulée, l'amenée d'au moins des parties de la masse de coulée (3) se produit de la machine de chambrage (4) dans le réservoir (5).

9. Produit de programme informatique (9), comprenant un support lisible par ordinateur doté d'un code de programmation lisible par la machine, qui lorsqu'il est exécuté sur un ordinateur (10) relié activement à une installation (1) de fabrication de produits de coulée (2) à partir d'une masse de coulée (3), notamment une installation (1) selon la revendication 8, fait fonctionner l'installation (1) par le biais d'un procédé selon l'une quelconque des revendications 1 à 7.

10. Procédé de transformation d'une installation (1) de fabrication de produits de coulée (2) à partir d'une masse de coulée (3), l'installation (1) comprenant, en suivant la direction d'écoulement du produit, au moins les composants suivantes :
- une machine de chambrage (4) pour au moins des parties de la masse de coulée (3) ;
- des réservoirs (5) pour la masse de coulée (3) ;
- une machine de coulée (6) pour la masse de coulée (3) ;
- un dispositif (7) pour le traitement ultérieur des produits de coulée (2) ; et
au moins des parties de la masse de coulée (3) pouvant être amenées au réservoir (5) depuis la machine de chambrage (4), **caractérisé en ce que** l'installation (1) est transformée de telle sorte qu'en fonction d'au moins un signal de commande ou de régulation (S) basé sur la consommation de masse de coulée (3) actuelle et/ou incessamment attendue par la machine de coulée (6) et/ou l'installation de coulée, l'amenée d'au moins des parties de la masse de coulée (3) se produit de la machine de chambrage (4) dans le réservoir (5).

11. Procédé selon la revendication 10, **caractérisé en ce que** l'installation (1) est équipée d'un produit de programme informatique selon la revendication 9.
